# EUROPÄISCHE PATENTSCHRIFT

(11) **EP 3 088 336 B1**
(45) Veröffentlichungstag und Bekanntmachung des Hinweises auf die Patenterteilung: **14.02.2018**
(21) Anmeldenummer: 16000843.9
(22) Anmeldetag: 14.04.2016
(51) Int. Cl.: B65G 15/16, B65G 15/18

(54) **BANDFÖRDERANLAGE ZUM TRANSPORTIEREN VON INSBESONDERE SCHÜTTGUT**
BELT CONVEYOR DEVICE FOR TRANSPORTING OBJECTS, IN PARTICULAR BULK MATERIAL
INSTALLATION DE TRANSPORT A BANDE, EN PARTICULIER POUR DES MARCHANDISES EN VRAC

(30) Priorität: 28.04.2015 DE 102015005397
(43) Veröffentlichungstag der Anmeldung: 02.11.2016
(73) Patentinhaber: VHV Anlagenbau GmbH, 48477 Hörstel (DE)
(72) Erfinder: Verlage, Bernhard, 48477 Hörstel-Riesenbeck (DE); Krasenbrink, Thomas, 48477 Hörstel-Riesenbeck (DE)
(74) Vertreter: Deters, Frank

(56) Entgegenhaltungen:
- DE-A1- 2 237 689
- DE-A1-102011 118 791
- DE-U1-202006 007 637
- JP-A- 2001 315 931
- US-A- 3 324 806

## Beschreibung

Die Erfindung betrifft eine Bandförderanlage zum Transportieren von insbesondere losem Schüttgut gemäß dem Oberbegriff des Anspruchs 1.

Bei einer als Steilbandförderer ausgebildeten Bandförderanlage gemäß DE 20 2006 007 637 U1 /1/ ist ein Gurtsystem vorgesehen, das ein das Material aufnehmendes Hauptband und einen diesem als Deckband zugeordneten zweiten Fördergurt aufweist. Damit wird das zugeführte Material im Bereich einer in Förderrichtung bogenförmig verlaufenden Übergangszone zwischen die Vorderseiten der beiden Bänder eingeführt, zwischen den beiden Bändern gepresst und dabei das Material mitgeführt.

Für diese Aufnahme des Materials ist eine Übergangszone im Bereich einer gattungsbildenden Rollenumlenkung vorgesehen, wobei ein eine "Knicktrommel" definierender Walzenkörper mit einer radialen Ausformung versehen ist und damit ein radial nach innen nutzbarer Aufnahmeraum für das Schüttgut gebildet ist. Im Bereich dieses Aufnahmeraumes sind jeweilige, sich zwischen zwei axial beabstandeten Auflagezylindern erstreckende Federelemente vorgesehen. Diese werden erst mit Beginn einer Material-Förderphase von der Rückseite des Deckbandes radial nach innen gedrückt, da das nunmehr doppellagige Fördertrum in "gefülltem" Zustand nach innen ausweicht und die Federelemente als eine Abstützung wirksam sind. Damit ist im Bereich der "Knicktrommel" mit den zwei axial beabstandeten Auflagezylindern nur eine Optimierung der Materialaufnahme erreichbar, da das gefüllte System an den Federelementen abgestützt und in stabiler Verbindungslage weiterbewegt wird.

Bei einer Konstruktion gemäß US 3,762,534 /2/ ist im Bereich der Rollenumlenkung eine Konstruktion mit einer zylindrischen Rolle vorgesehen. Diese ist im mittleren Bereich mit einer in Umfangsrichtung der Rolle ringförmigen konkaven Ausnehmung versehen, so dass diese aufwändig herzustellende Ausführung der Rollenumlenkung nur eine optimale Materialaufnahme und -weitergabe ähnlich /1/ ermöglicht und dabei ebenfalls ein Ausweichen des gefüllten Systems in den Bereich der Konkavität nutzbar ist.

Eine weitere Art von Bandförderanlagen werden als so genannte Deckbandförderer oder als Zwillingsbänder bezeichnete Konstruktion eingesetzt. Ausgehend von den als Gegenlager wirkenden Federelementen (gemäß /1/ und /2/) werden bei diesen Doppel-Band-Anlagen jeweilige Gegenrollen als zusätzliche Bandabstützung verwendet. Diese Gegenrollen sind jeweils auf einer gemeinsamen zentralen Achse mit der jeweiligen "Knicktrommel" - die mit den beiden beabstandeten Auflagezylindern versehen ist - gehalten und rotieren entsprechend der Drehrichtung des Systems.

Das Deckband dieser Doppellagen-Systeme läuft dabei in einer ersten Phase beim Auflaufen und Umlenken - in der keine Gegenlagerung wirkt - auf die Umfangsflächen der beiden Auflagezylinder auf. Erst in der in einem 180°-Bogenabstand erfolgenden Füllphase des Systems wird das unter dem Druck des Füllmaterials nach innen ausweichende Deckband durch die zentrale Gegenrolle gestützt.

Diese mit /1/ und /2/ vergleichbaren Konzepte mit einer Deckband-Gegenrollen-Führung in der Füllphase des ablaufenden Doppelbandes werden bei Vorschlägen gemäß DE 22 37 689 A1 /3/, US 3,982,626 A /4/, DE 33 21 926 A1 /5/ und EP 0 422 301 A1 /6/ realisiert; während DE 26 14 109 A /7/ bei einem Doppelbandsystem mit Hochförderung als "Gegenlager" einen in einem umhüllenden Transportkasten aufgebauten Luft-Überdruck nutzt.

Bei sämtlichen der vorbeschriebenen Systeme gemäß /1/ bis /7/ hat der praktische Einsatz gezeigt, dass der als Deckband umzulenkende Fördertrum im Bereich der die beiden Auflagezylinder aufweisenden "Knicktrommel" einem erhöhten Verschleiß ausgesetzt ist und damit die Langzeitstabilität der Anlage insgesamt nachteilig beeinflusst ist.

Die Erfindung befasst sich mit dem Problem, eine Bandförderanlage zum Transportieren von Schüttgut so zu gestalten, dass diese Anlage im Bereich ihrer das Schüttgut erfassenden Rollenumlenkung eine verbesserte Führungskonstruktion mit vergleichsweise einfach herzustellenden und in das System integrierbare Einzelteilen aufweist, wobei deren optimales Zusammenwirken für den auflaufenden Bereich des Förderband-Trums dessen sichere zentrale Positionierung und Mitnahme auf der "Knicktrommel" ermöglicht.

Die Erfindung löst diese Aufgabe mit einer Bandförderanlage mit den Merkmalen des Anspruchs 1. Hinsichtlich wesentlicher weiterer Ausgestaltungen wird auf die Ansprüche 2 bis 15 verwiesen.

Bekannte Rollenumlenkungen von Bandförderanlagen weise im Bereich einer Schüttgutaufnahme mit "Zwillingsbändern" zumindest ein als Hauptband das Schüttgut zuführendes Förderband und ein Deckband als zweites Förderband auf, die im Bereich der Rollenumlenkung zusammengeführt werden. Diese kann im Bereich eines "geteilten" Walzenkörpers mit zumindest zwei axial gegenüberliegenden Auflagescheiben oder -zylindern versehen sein, die bei Rotation eine tangentiale Aufnahme für das zumindest eine Deckband realisieren. Das Deckband wird im Bereich dieser auch als eine "Knicktrommel" bezeichneten Umlenkung-nachfolgend einer 180°-Bogenumlenkung auf den Auflagezylindern - mit dem das Schüttgut zuführenden Hauptband zu dem "Zwillingsband" vereinigt.

Die beiden vorzugsweise gleiche Durchmesser aufweisenden Auflagescheiben sind dabei so angeordnet, dass quer zur Förderrichtung des Systems ein einen Freiraum bildender Stützabstand für das aufzunehmende und "gefüllt" umzulenkende Trum des Doppel-Bandes definiert ist.

Dieses Grundkonzept einer variabel an jeweilige Bandförderanlagen anpassbaren Rollenumlenkung wird erfindungsgemäß dadurch verbessert, dass im Bereich des als Ausweichzone für das gefüllte Doppel-Band vorgesehenen Freiraumes zwischen den beiden Auflagescheiben eine zumindest phasenweise an dem zugeführten Trum des Deckbandes wirksame Auflaufsicherung in das Fördersystem integriert wird. Mit dieser von der Drehachse der Auflagescheiben unabhängigen Auflaufsicherung wird die Lage des mit den rotierenden Auflagescheiben in Kontakt gelangenden Bereiches des auflaufenden Deckband-Trums beeinflusst; die Zone des in Bogenabstand befindlichen Doppel-Bandes im Füllzustand wird von dieser Auflaufsicherung gerade nicht unmittelbar abgestützt.

Mit dieser konstruktiven Verbesserung der an sich bekannten "Knicktrommel" wird erreicht, dass bisher an Förderbändern bzw. dem Deckband bei den Zugbelastungen auftretende geometrische Veränderungen im tangentialen Auflagebereich und ein damit verbundenes Walken des Bandmaterials vermieden sind, derart, dass die Langlebigkeit des Förderbandes unterstützt wird.

Im Sinne der erfindungsgemäßen Positionierung dieser Auflaufsicherung unterhalb bzw. an der Rückseite des Deckbandes ist davon auszugehen, dass bisher ohne diese zusätzliche Sicherung ein Walken im Sinne einer mechanischen Verformung des mit der Walzenrotation gezogen auflaufenden Deckbandes erfolgt ist. Nunmehr wird mit der erfindungsgemäßen Verbesserung insbesondere ein zwischen den beiden Auflaufzylindern umlaufender Bandbereich nicht mehr durch das aus Längen-und Breitenunterschieden beim Ziehen des Bandes verursachtes Walken belastet, nachteilige Erwärmungen durch Walkarbeit sind vermieden, und die Qualität des Bandlaufes zur Doppel-Lagen-Zone hin wird insgesamt verbessert.

Dieses erfindungsgemäße System mit Auflaufsicherung wird vorzugsweise bei Bandförderanlagen zum Transportieren von Schüttgut, Stückgut o. dgl. Materialien eingesetzt. Ein in Form einer Doppel-Band-Anlage ausgebildeter Steilbandförderer kann bei hoher Transportleistung effektiv eingesetzt werden. Das zugeführte Material wird im Bereich einer bogenförmig verlaufenden Übergangszone der Rollenumlenkung zwischen die Vorder- bzw. Oberseiten des Hauptbandes und des Deckbandes eingeführt, gepresst und zwischen den Bändern mitgeführt. Die konstruktive Gestaltung dieser Rollenumlenkung kann fachgemäß auch als eine spezielle Knickstation im Bereich einer komplexen Bandförderanlage definiert werden.

Das sowohl bei beliebigen Fördereinrichtungen mit einer einfachen Hauptband-Anlage als auch bei Fördereinrichtungen mit einer Doppel-Band-Anlage einsetzbare Walzenkonzept einer Zwei-Scheiben-Umlenkung mit Freiraum im Bereich des Umlenkbogens ist darauf gerichtet, dass nunmehr mit der erfindungsgemäß integrierten Auflaufsicherung eine verbesserte Rollenumlenkung realisiert wird und diese mit geringem technischen Aufwand in unterschiedliche Förderkonzepte integriert werden kann.

Dabei kann mit der erfinderischen Verbesserung der zugeführte Trum des zumindest einen Förderbandes nicht mehr - wie bisher - ungewollt oder ungesteuert in der Phase des Auflaufens auf die rotierenden Auflagescheiben zwischen die beiden Auflaufscheiben radial nach innen ausweichen, da in diesem Bogenbereich des jeweiligen Scheibenmantels die tangential zwischen den beiden Auflagescheiben ausrichtbare und radial im Abstand zur Drehachse der Auflagescheiben positionierbare Auflaufsicherung wirkt. Damit ist eine hoch belastbare und langzeitstabil nutzbare Scheiben-Band-Einheit erreicht.

Dieses insbesondere für die vorbeschriebene Doppelband-Umlenkung konzipierte System ist dabei prinzipiell auch zur Anwendung bei einlagigen Gurtumlenkungen geeignet. Damit können bisher installierte, sich wegen der nunmehr geringeren Walkverluste über die volle Breite des jeweiligen Förderbandes erstreckende Ausführungen von Umlenkrollen entbehrlich werden. Es hat sich gezeigt, dass für das in den Durchmesser- und Breitenabmessungen variable Zwei-Scheiben-System auch die Gestehungskosten reduziert werden können.

Die an der Unterseite des auflaufenden Bandtrums angreifende Auflaufsicherung kann in ihrer konstruktiven Gestaltung so an einen jeweiligen Stützabstand zwischen den beiden Auflagescheiben bzw. die Abmessungen des zwischen diesen gebildeten Freiraumes angepasst werden, dass eine ungewollte, radial nach innen gerichtete Ausformung des Bandes auch bei hohen Zugbelastungen des Fördersystems unterbleibt. Damit kann eine Walkbelastung des Förderbandes vollständig vermieden werden.

Es hat sich gezeigt, dass eine optimale Wirkung der variabel auf das System einstellbaren Auflaufsicherung dann erreicht ist, wenn diese - entsprechend dem auf die Auflagescheiben auflaufenden Trum - ebenfalls in einer damit vorgegebenen "tangentialen" Auflaufposition an der Unterseite des jeweiligen Bandes bzw. Deckbandes anliegt. Damit wird eine vom Außenumfang der Auflagescheiben und von einer Berührungslinie der Auflaufsicherung definierte "gemeinsame" Auflaufphase erreicht. In dieser Position bildet die Auflaufsicherung ein in Querrichtung des Bandes linienförmiges "Gegenlager", so dass das denkbar mit gewalkten Verwindungen auflaufende Band-Trum nunmehr gezielt in Querrichtung "gestreckt" wird. Jeweilige, mit dem Vorlauf des Bandes herangeführte Verwindungen können ausgeglichen werden, so dass dieser Teilbereich des Band-Trums auf den jeweiligen Außenumfang der beiden Auflagescheiben vorteilhaft gleichmäßig aufläuft und mittels des rotierenden Systems in den Bereich der "Füllzone" weiterbewegt wird.

Die erfindungsgemäße Konstruktion der Auflaufsicherung ist - im Unterschied zu den als Stand der Technik zitierten zentralen Gegenrollen gemäß /1/ bis /7/ - darauf gerichtet, dass im Wesentlichen gegenüberliegend der das Schüttgut aufnehmenden Doppelband-Füllzone und in einem zu dieser vorgelagerten Bogenbereich das Förder- bzw. Deckband beeinflusst wird. Diese Auflaufsicherung bildet eine radial im Abstand und ohne Verbindung zur Stützachse der Auflagescheiben angeordnete Baugruppe, die an der Unterseite des Deckbandes genau dann anliegt, wenn die rotierenden Auflagescheiben die Bandunterseite tangential erfassen, mitziehen und im Bogenbereich umlenken.

Dabei wird am vorlaufenden Band-Bogen zwar ein in Richtung des Freiraums nach innen gerichteter "Pressvorgang" auf das Bandmaterial - entsprechend der Gurtspannung - übertragen, aber gleichzeitig wird mit der Auflaufsicherung eine Gegenkraft über die gesamte Bandbreite erzeugt, so dass das Band in dieser Auflaufphase ohne die bisher zu beobachtenden ungewollten Verformungen durch Walken o. dgl.

Unregelmäßigkeiten auf das System "aufläuft". Durch einen von der Auflaufsicherung permanent erzeugbaren Spannungszustand am Band wird dessen Auflaufen auf die Auflagescheiben gesichert. Das Verlagern des Bandes entlang des Umlenkbogens kann damit ohne in den Freiraum gerichtete Walk-Bewegungen erfolgen.

Ausgehend von diesem Prinzip der erfindungsgemäßen Auflaufsicherung ist bei der Anwendung des Doppelband-Förderers vorgesehen, die Elastizität des Deckbandes für eine Optimierung der Füllphase zu nutzen. Bei dieser im Bogenabstand erfolgenden Aufnahme des Schüttgutes wird nunmehr das zuvor im Bereich der Auflaufsicherung parallel auf den Auflagescheiben ausgerichtete Deckband einer gezielten und damit bandschonend vorgebbaren Verformung ausgesetzt. Mit der Aufnahme des Schüttgutes ist eine Verformung des Deckbandes so verbunden, dass dieses bereichsweise in den Freiraum zwischen die Auflagescheiben - im Wesentlichen "gegenüberliegend" der oben liegenden Auflaufsicherung - eingezogen wird. Entsprechend dem aufgenommenen Volumen des Schüttgutes wird im Querschnitt des Doppellagen-Bandes eine gewölbte Abdecklinie erzeugt, so dass das nunmehr "eingezogene" Deckband entsprechend seiner Elastizität eine Verringerung des auf den beiden Auflagescheiben aufliegenden Breitenmaßes erfährt.

Die erfindungsgemäße Auflaufsicherung ist dabei so konzipiert, dass diese auch bei einem - auf jeweils entgegen gerichtete Förderrichtung - umschaltbaren Bandsystem angewendet werden kann. Daraus resultiert zwangsläufig, dass die Auflaufsicherung dann entsprechend der Drehrichtung des Systems auch an jeweils unterschiedlichen tangentialen Auflaufpositionen des Bandtrums wirksam einzusetzen ist.

Dabei ist eine entsprechende Verlagerung der Auflaufsicherung in unterschiedliche Nutzstellungen denkbar.

Eine weitere Gestaltung der Bandförderanlage sieht vor, dass diese im Bereich der Rollenumlenkung auch mit mehreren Auflaufsicherungen versehen sein kann. Diese im Auflagebogen des Bandtrums befindlichen und in Umfangsrichtung der Auflagescheiben versetzt angeordneten Auflaufsicherungen können dabei wahlweise einzeln oder gemeinsame in ihre jeweilige Band-Sicherungs-Lage gebracht werden.

Eine zweckmäßige konstruktive Umsetzung der Auflaufsicherung sieht vor, dass diese vorzugsweise in Form einer linearen Auflaufstütze ausgebildet wird. Diese Auflaufstütze ist dabei so positioniert, dass an der Rückseite des jeweiligen Bandes der zumindest bereichsweise linearer Wirkbereich gebildet ist. Dieser lineare Wirkbereich kann dabei als eine quer zur Förderrichtung verlaufende Berührungslinie oder eine Berührungsfläche ausgebildet sein. Wie bereits ausgeführt, ergibt es sich dabei, dass der auflaufende Trum des Bandes tangential zwischen den beiden Auflagescheiben an deren Umfang erfasst und dabei gleichzeitig die Auflaufstütze wirksam wird. Ausgehend von dieser planen Auflageposition wird das Band dann über einen vorzugsweise 180°-Umlenkbogen entlang der Umfangsflächen der beiden Auflagescheiben geführt und mitgenommen.

In bevorzugter Ausführung des Systems als eine Doppel-Band-Anlage erfolgt im unteren tangentialen Austrittsbereich des im 180° Bogenabstand umgelenkten Deckbandes die vorbeschriebene Press-Vereinigung mit dem hier einlaufenden Hauptband als Schüttgutträger. Ab dieser Phase wird zwischen diesen beiden Förderbändern das mit dem Hauptband zugeführte Schüttgut gehalten, so dass dieses in Förderrichtung des ablaufenden Doppelbandes auch über vertikale Förderstrecken verlagert werden kann.

Denkbar ist jedoch auch, dass bei der erfindungsgemäßen Ausrüstung einer als eine Ein-Band-Anlage vorgesehenen Struktur die Auflaufstütze nur an dem einen Band unterseitig angelegt wird und dieses in dem einfachen Fördersystem mit verbesserter tangentialer Ausrichtung an der Umlenkphase umläuft. Damit wird prinzipiell auch die optimale Auflaufsituation von Förderbändern gemäß den beiden vorbeschriebenen Auflagescheiben erreicht. Diese einfach realisierbare Verbesserung und insgesamt preiswert nachrüstbare Rollenumlenkung ist in weitgehend beliebige Förderanlagen integrierbar, so dass die bisher üblichen Kompaktrollen auch ersetzt werden können.

Das vorbeschriebene Konzept der das Band von unten spannenden Auflaufsicherung wird vorteilhaft in Form der einen Auflaufstütze realisiert, so dass diese in unterschiedlichen Ausführungen ein Gegenglied des Auflauf-Leit-Systems bildet. An diesem Gegenglied kann das auf den Auflagescheiben auflaufende Förderband mit geringem Aufwand ausgerichtet werden. Insbesondere ist dabei im Bereich der Auflaufstütze eine Gleitreibung von hier "zwangsweise" aufeinanderliegenden Band-und Gegengliedstrukturen vorgesehen. Ebenso können Ausführungen mit Rollelementen als die Gegenglieder vorgesehen werden, so dass die Reibbelastung an der Bandoberfläche mit dieser Art der Auflaufstütze weiter reduziert ist.

Dieses Press-Auflage-Konzept ist dabei so ausgelegt, dass mittels der zumindest einen Auflaufstütze die radiale Flächenpressung zumindest des auf den beiden Auflagescheiben aufliegenden Trums des Bandes beeinflusst werden kann. Diese - bereits vorstehend beschriebene - Funktion des Systems ist darauf gerichtet, denkbare Unregelmäßigkeiten, Verwindungen o. dgl. Störeinflüsse des Bandlaufes in der Zuführphase auszugleichen, derart, dass im Bereich der beiden Auflagescheiben eine in Querrichtung zumindest bereichsweise linearisierte Kontur geschaffen wird. Damit kann das Förderband in der Umlenkphase auf diese schonenden, konstanten Umlenkbedingungen so eingestellt werden, dass einem Verschleiß der Bauteile bzw. des Bandes langzeitig effektiv entgegengewirkt wird.

Die konstruktive Ausgestaltung der Auflaufstütze sieht vor, dass diese auch als eine an das Deckband aktiv anpressbare Baugruppe ausgebildet werden kann. Dazu kann die Auflaufstütze mittels eines konstruktiv variabel ausführbaren Stellgliedes in die jeweilige Anlageposition verlagert werden. Ebenso ist denkbar, dass - in Umkehr der Presskrafterzeugung - im Bereich der beiden Auflagescheiben jeweilige Stellelemente vorgesehen sind. Diese können mit an einem Rahmen abgestützten Bauteilen versehen sein, so dass mit diesen die beiden Auflagescheiben relativ zur Auflaufstütze verlagert werden können. Damit wird eine weitere Einstellvariante zur Optimierung der Bandumlenkung erreicht.

Das vorbeschriebene System mit der einen Auflaufstütze kann dadurch erweitert sein, dass im Bereich des von den beiden gleiche Durchmesser aufweisenden Auflagescheiben definierten Umlenkbogens auch mehrere Auflaufstützen in den Umlenkbereich integriert werden. Diese Auflaufstützen können dabei wahlweise gemeinsam oder einzeln in die jeweilige Anlagestellung überführt werden. Damit wird in Umfangsrichtung bzw. Laufrichtung des umgelenkten Trums eine "mehrstufige" Linearisierung des auflaufenden Förderbandes erreicht, und dieses kann optimal aus der Umlenkzone auslaufen. Mit dieser erweiterten Bandsicherung kann die Störanfälligkeit des Systems weiter gesenkt werden.

Bei der Anwendung der Auflaufstütze wird eine optimale Bandbeeinflussung insbesondere dadurch erreicht, dass der von der Auflaufstütze ablaufende und dabei zumindest bereichsweise auf den Auflagescheiben aufliegende Trum des Bandes kraftschlüssig gegen eine axiale Verschiebung gesichert wird. In diesem Bereich des von der Auflaufstütze ablaufenden Trums ist auch eine erhöhte Radialkraft nutzbar, derart, dass im Bereich der beiden Auflagescheiben eine axial von diesen weg in den Freiraum gerichtete Radialausformung gebildet werden kann. Dieser Effekt kann sowohl bei der vorbeschriebenen Ausführung der Zwei-Band-Anlage zum Materialtransport als auch bei einer einfachen Ein-Band-Umlenkung genutzt werden.

Die jeweilige konstruktive Umsetzung der Auflaufstütze hat gezeigt, dass diese vorzugsweise mit zumindest einem an dem zugeordneten Band anlegbaren Stangenteil als Anlageglied versehen werden kann. Ebenso ist denkbar, dass im Bereich der Auflaufstütze zumindest ein Rollenelement als Anlageglied vorgesehen wird.

Eine weitere Ausführung sieht eine mehrteilige Ausbildung des Anlagegliedes vor, so dass eine Aneinanderreihung dieser Glieder einen "unterbrochenen" Abstützeffekt am Band bewirkt. Dabei kann das mehrteilige Anlageglied aus einer Aneinanderreihung von auf Lücke zueinander versetzten Stangenteilen und/oder Rollenelementen gebildet sein.

Weitere Vorteile bietet die federnde Ausführung eines Anlagegliedes im Bereich der Auflaufstütze. Damit wird eine elastische Ausweichbewegung an dem von unten gepressten Band möglich, derart, dass wulstartige Profilbereiche des Bandes beschädigungsfrei die Umlenkzone durchlaufen können.

Die Anordnung der Auflaufstütze im Freiraum zwischen den beiden Auflagescheiben ist so optimiert, dass eine im Bandbereich nach der Auflaufstütze vorgesehene Ausformung des Förderbandes so begrenzt wird, dass auch bei phasenweise extremen Zugbelastungen ein vollständiges Einziehen des Bandes zwischen die beiden Auflagescheiben - nämlich bis hin zu einem Abrutschen von diesem - sicher vermieden wird. Dazu wirkt die Auflaufstütze im Bereich des Freiraumes mit einem die Bandverlagerung begrenzenden Gegenhalter zusammen. Der Gegenhalter kann in unterschiedlichen Ausführungen vorgesehen sein, wobei eine gleitende oder rollende Abstützung denkbar ist. In jedem Fall soll für das ausgeformte Trum des Bandes eine reibungs- und verschleißarme Abstützung dann erreicht werden, wenn eine Überbelastung in der Umlenkphase zu kompensieren ist.

Die vorbeschriebene erfindungsgemäße Ausführung der Bandförderanlage mit Rollenumlenkung weist zwei axial gegenüberliegende Auflagescheiben auf, so dass quer zur Förderrichtung ein einen Freiraum bildender Stützabstand definiert ist. Dieses für eine Zwei-Band-Anlage einsetzbare System kann in umfassender Anwendung im Bereich der Fördertechnik vorteilhaft auch in die Ein-Band-Anlage integriert werden. Das hier als Hauptband umlaufende Förderband wirkt dabei an seiner Rückseite mit einer Auflaufstütze als die Sicherung zusammen. Diese Ein-Band-Anlage mit Auflaufsicherung ist bei unterschiedlichen Konstruktionen in beliebig erweiterbaren Fördersystemen anwendbar.

Weitere Einzelheiten und vorteilhafte Ausgestaltungen ergeben sich aus der nachfolgenden Beschreibung und der Zeichnung, in der zwei Ausführungsbeispiele einer erfindungsgemäßen Bandförderanlage näher veranschaulicht sind. In der Zeichnung zeigen:

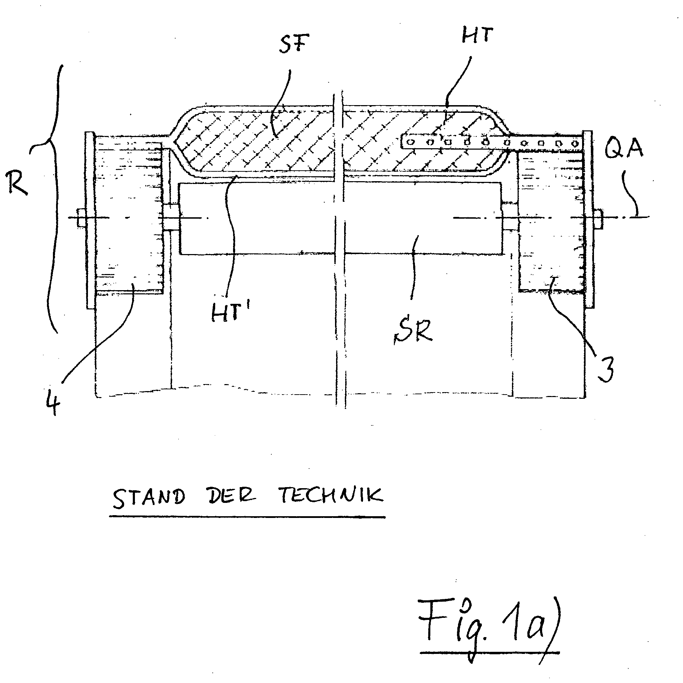

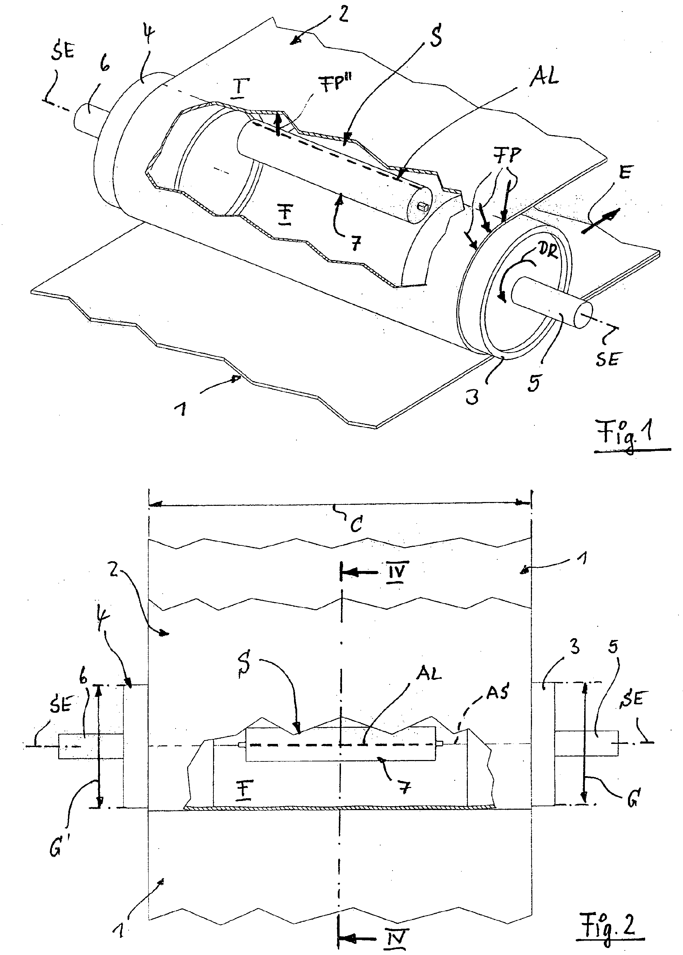

- Fig. 1a: eine teilweise geschnittene Stirnansicht einer Umlenkzone im Bereich einer Bandanlage gemäß dem Stand der Technik,
- Fig. 1: eine teilweise geschnittene perspektivische Prinzipdarstellung einer Bandförderanlage mit Zwei-Band-Umlenkung im Bereich einer Knickstation,
- Fig. 2: eine teilweise geschnittene Draufsicht im Bereich der Knickstation gemäß Fig. 1,
- Fig. 3: eine Prinzipdarstellung ähnlich Fig. 1 mit einer Befüllung des Hauptbandes im Bereich der Zwei-Band-Umlenkung mit oberem Deckband,
- Fig. 4: eine geschnittene Vorderansicht ähnlich einer Linie III-III in Fig. 3,
- Fig. 5: eine teilweise geschnittene Draufsicht auf das System gemäß Fig. 3 mit Ausschnitt im Bereich der innen liegenden Auflaufsicherung ähnlich Fig. 2,
- Fig. 6: eine Querschnittsdarstellung des Umlenksystems mit Auflaufsicherung gemäß einer Linie IV-IV in Fig. 2,
- Fig. 7: eine teilweise geschnittene Vorderansicht der Bandanlage gemäß Fig. 6 mit einem zwischen den Auflagescheiben zusätzlich zur Auflaufsicherung vorgesehenen Gegenglied,
- Fig. 8: eine Schnittdarstellung ähnlich Fig. 6 mit zwei radial versetzt angeordneten Auflaufsicherungen an der Unterseite des Deckbandes,
- Fig. 9: eine vergrößerte Schnittdarstellung gemäß einer Linie V-V in Fig. 4,
- Fig. 10: eine teilweise geschnittene Perspektivdarstellung einer erfindungsgemäßen Bandförderanlage mit zwei Auflagescheiben im Bereich der Rollenumlenkung und einem zwischen diesen als Auflaufsicherung angeordneten Gegenglied,
- Fig. 11: eine Draufsicht der Bandförderanlage gemäß Fig. 10, und
- Fig. 12: eine zweite Ausführung der Bandförderanlage im Bereich der Rollenumlenkung mit einer Ein-Band-Umlenkung.

In Fig. 1a) ist eine den Stand der Technik abbildende Rollenumlenkung R mit einem eine doppellagige Struktur bildenden Deckbandförderer gezeigt (Auszug aus DE 22 37 689). Dabei bilden eine obere und untere Haut HT, HT einen mit Schaumstoff SF gefüllten Raum, so dass dieses Doppel-Lagen-Band im Bereich einer zentral die Querachse QA bildenden Stützrolle SR anliegend geführt werden kann und dabei auf seitlichen Auflagescheiben 3, 4 mitnehmbar ist.

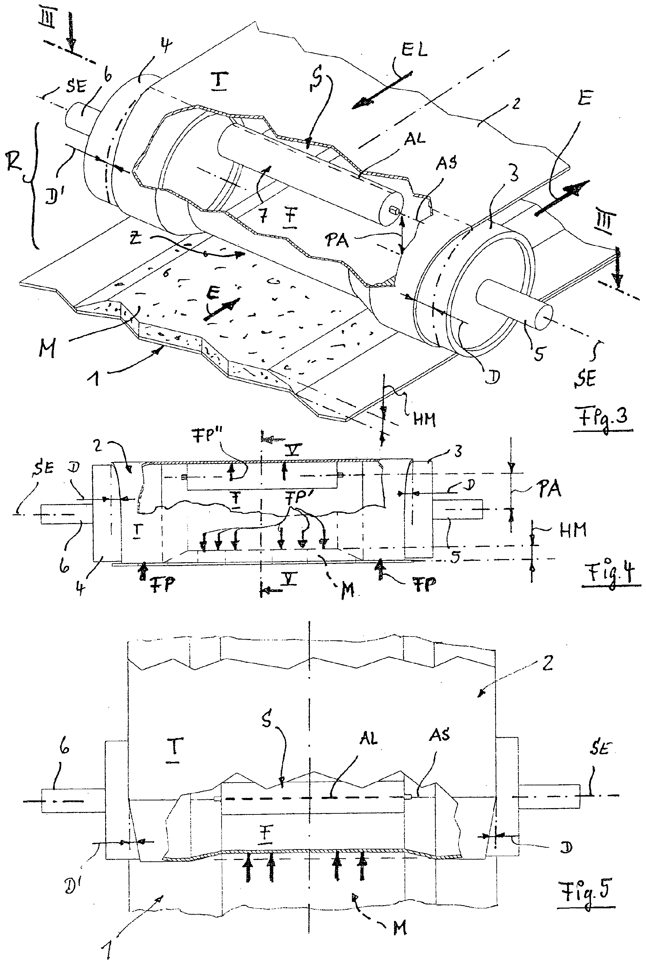

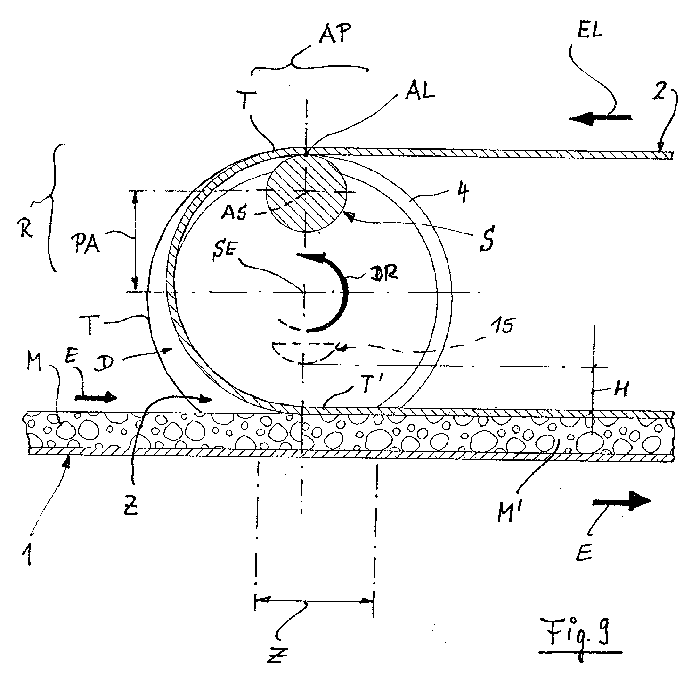

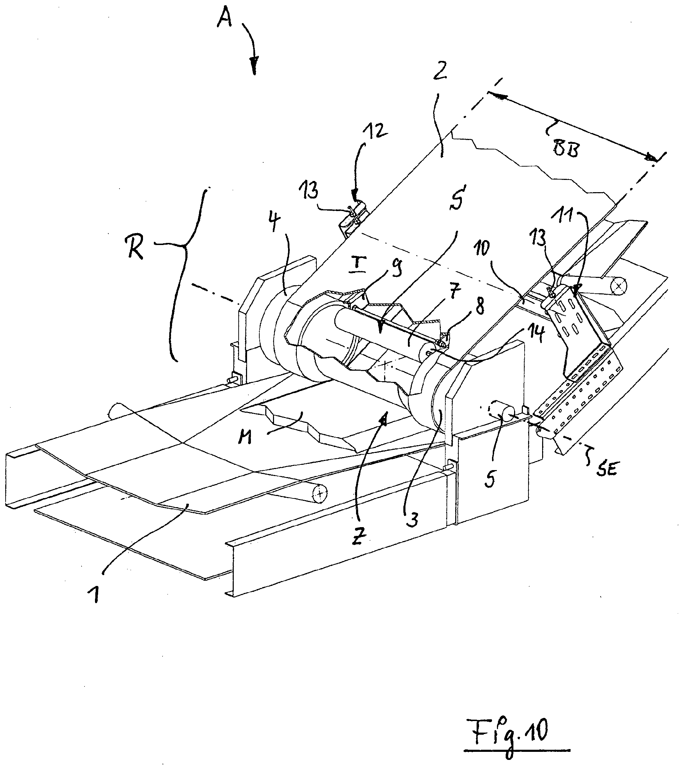

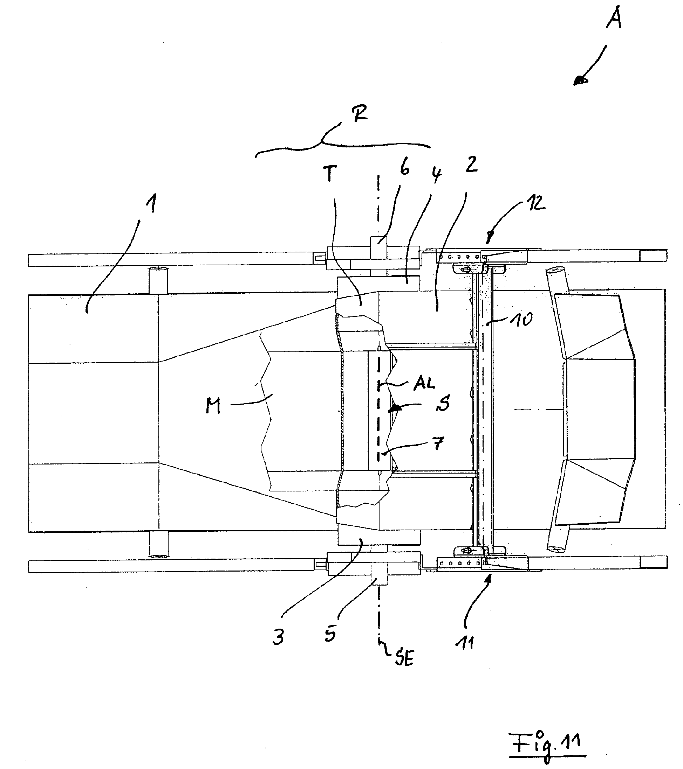

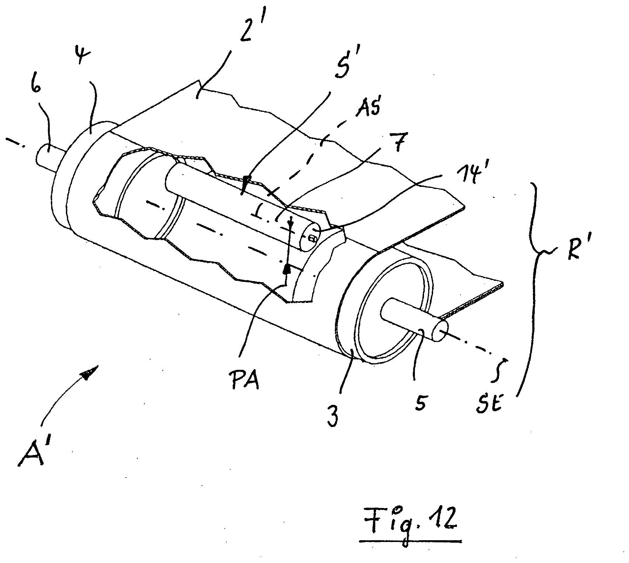

Aus einer Zusammenschau von Fig. 1 und Fig. 10 wird eine erste Ausführung einer erfindungsgemäßen Bandförderanlage A zum Transportieren von Schüttgut, Stückgut o. dgl. Materialien deutlich. Derartige Bandförderanlagen A können in Form von Doppel-Band-Anlagen ausgeführt werden. Diese sind dann mit einem das Material M (Fig. 3) aufnehmenden Hauptband 1 und einem diesem hier als Deckband zugeordneten zweiten Förderband 2 versehen. Damit wird das zugeführte Material M in Förderrichtung E in einer Übergangszone Z (Fig. 9) zwischen die Vorderseiten der beiden Bänder 1, 2 eingeführt. In einem nachgeordneten Teilbereich der Förderstrecke sind die beiden Bänder 1, 2 mit ihren Vorderseiten gegeneinander gepresst, und damit kann das Material M mitgeführt werden. Aus der Zusammenschau von Fig. 1 und Fig. 9 wird deutlich, dass in der Übergangszone Z eine sowohl das Hauptband 1 als auch das oberhalb diesem zugeführte Deckband 2 im Bereich eines Umlenkbogens erfassende Rollenumlenkung R wirksam ist (Stand der Technik: DE 20 2006 007 637 U1). Dieses Konzept der bekannten Bandförderanlagen A (zweite Ausführung: A', Fig. 12) ist in einer ersten Ausführung (Detaildarstellungen gemäß Fig. 10 und Fig. 11) auf eine Rollenumlenkung R gerichtet, die mit zumindest zwei axial gegenüberliegenden Auflagescheiben 3, 4 versehen ist und diese einen durchgehenden, im Bereich einer zentralen Querachse QA offenen Freiraum F bilden (Fig. 3).

Diese als seitliche Einzelteile im Bereich der Rollenumlenkung R vorgesehenen und in einer bevorzugten Drehrichtung DR (Fig. 9) bewegbaren Auflagescheiben 3, 4 wirken nunmehr in erfindungsgemäßer Kombination mit einer allgemein mit S bezeichneten Auflaufsicherung zusammen. Diese konstruktiv variabel gestaltbare Auflaufsicherung S ist im Bereich des Freiraumes F zwischen den hier randseitig das Deckband 2 aufnehmenden Scheiben 3 und 4 wirksam. Damit kann die Lage des Deckbandes 2 zumindest im Bereich des auf die Rollenumlenkung R auflaufenden Trums T beeinflusst werden.

Dazu weist die Auflaufsicherung S im Bereich des Freiraums F eine Einbaulage auf, die weitgehend unabhängig von einer zentralen Stützebene SE der beiden - eine jeweilige Drehachse 5, 6 aufweisenden - Auflagescheiben 3, 4 vorgegeben werden kann. Dabei ist die Auflaufsicherung S vorzugsweise mit einem radialem Abstand PA (Fig. 3, Fig. 9) parallel zur Stützachse SE "nach oben" versetzt.

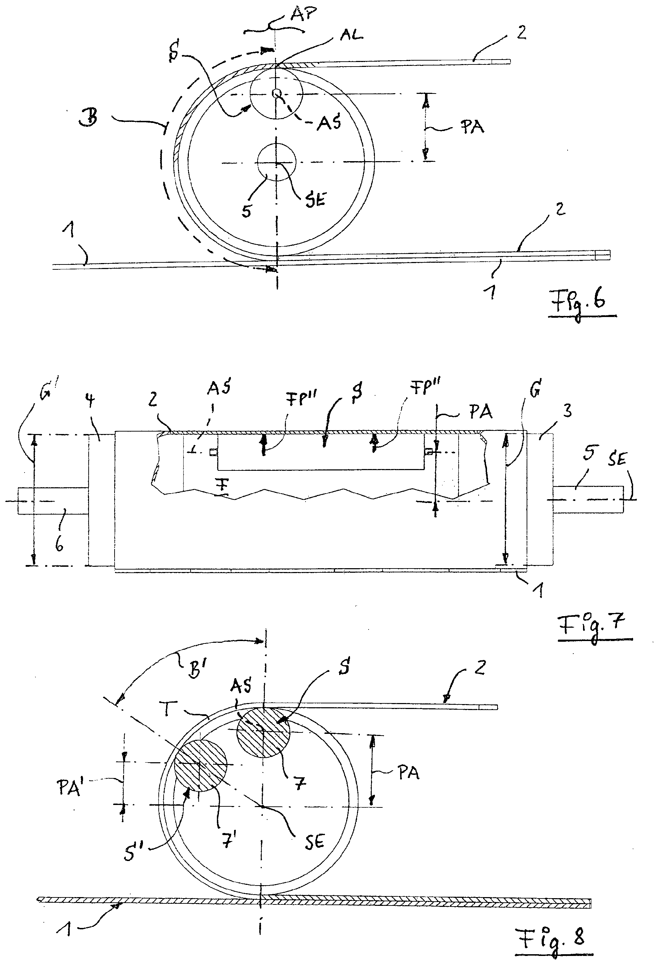

Aus der vergrößerten Schnittdarstellung gemäß Fig. 9 wird deutlich, dass die Auflaufsicherung S im Bereich des zugeführten Trums T des Deckbandes 2 vor allem dessen radial nach innen gerichteter Ausformung D, D' (Fig. 3) in der Aufnahmephase des Schüttgutes M entgegenwirken kann. Dabei wird deutlich, dass die Auflaufsicherung S - beginnend im Bereich einer tangentialen Auflaufposition AP - an dem jeweiligen Band 2 so wirksam ist, dass bisher bei Bandförderern des Standes der Technik auftretende Probleme durch "Walken" von Bandbereichen nicht mehr auftreten. Diese Verformungen werden beim Einlaufen des Bandes 2 (Pfeil EL; Fig. 9) in den tangentialen "Spannbereich" mittels der Sicherung S ausgeglichen. Durch die Elastizität des Deckbandes 2 kann dieses in der Füllphase (Fig. 3 bis Fig. 5) um ein seitliches Abstandsmaß D, D' (Fig. 3 bis Fig. 4) - entsprechend der Höhe HM des Materials M - nach innen verlagert werden. Durch die Auflaufsicherung S am Anfang des um Band 2 durchlaufenden Bogenbereichs B (Fig. 6 bis Fig. 8) ist dabei eine gleichmäßige Pressung (Pfeil FP, FP'; Fig. 4) erreicht und eine optimale Abdeckung des Materials M gewährleistet.

Weitere konstruktive Variationsmöglichkeiten ergeben sich für das erfindungsgemäße Scheiben-Sicherungs-Systems dadurch, dass die Auflagescheiben 3, 4 quer zur Förderrichtung E einen einstellbaren Stützabstand C aufweisen können. Damit kann das im Bereich jeweiliger Stützachsen 5, 6 gehaltene System der zumindest zwei Scheiben 3, 4 auch an unterschiedliche Bandbreiten BB angepasst werden (Fig. 10).

Eine weitere Ausgestaltung der erfindungsgemäßen Bandförderanlage A sieht vor, dass die Rollenumlenkung R mit mehreren Auflaufsicherungen S, S' (Fig. 8) ausgerüstet werden kann. Die zusätzliche Sicherung S' befindet sich vorzugsweise im Auflagebogen B' des Bandtrums T, so dass S' in Umfangsrichtung der Auflagescheiben 3, 4 versetzt zu S angeordnet ist. Dabei werden die "vertikalen" Achsabstände PA und PA' definiert.

Aus der Prinzipdarstellung gemäß Fig. 1 wird in Zusammenschau mit Fig. 10 deutlich, dass die konstruktiv variable Auflaufsicherung S insbesondere als eine lineare Auflaufstütze 7 ausgebildet ist. Mit dieser linearen Auflaufstütze 7 wird in Einbaulage an der Rückseite des Deckbandes 2 ein zumindest bereichsweise linearer Wirkbereich AL (verdickte Strich-Strich-Linie, Fig. 1) definiert. Mit dieser Darstellung wird deutlich, dass mittels der Auflaufstütze 7 für den tangential zwischen den beiden Auflagescheiben 3, 4 an deren Umfang auflaufenden Trum T des Bandes 2 an Stelle der Berührungslinie AL auch eine Berührungsfläche definiert werden kann. In der dargestellten Ausführung der beiden, vorzugsweise gleiche Durchmesser G, G' aufweisenden Auflagescheiben 3, 4 ergibt sich, dass die Berührungslinie AL oder -fläche (nicht dargestellt) parallel zu den beiden Stützachsen 5, 6 der Auflagescheiben 3, 4 mit dem Abstand PA (Fig. 3) verläuft.

Die als Auflaufstütze 7 ausgebildete Auflaufsicherung S bildet im Bereich der Rollenumlenkung R ein Gegenglied, an dem das auf die Auflagescheiben 3, 4 auflaufende Deckband 2 ausgerichtet werden kann. Damit kann für den nachfolgenden Umlenkvorgang eine ideale Anlage- und Pressposition für das Trum T vorgegeben werden. In dieser Phase wird mittels der Wirkkombination aus Bandspannung, Anlagedruck auf der Auflaufstütze 7 und Haftreibung auf den Auflagescheiben 3, 4 eine optimale Bandführung erreicht. Dabei ist ein "Schieflaufen" des Bandes vermieden, und durch eine gleichmäßige Bandbelastung in Zugrichtung kann auch die Langzeitstabilität des Bandes gewährleistet werden.

Es hat sich gezeigt, dass mittels der zumindest einen Auflaufstütze 7 insbesondere die radiale Flächenpressung FP, FP' (Fig. 4) zumindest des auf den beiden Auflagescheiben 3, 4 aufliegenden Trums T des Bandes 2 effektiv beeinflusst werden kann. Bei optimaler Flächenpressung weist das Band 2 eine in Querrichtung zumindest bereichsweise linearisierte Kontur (entsprechend der Linie AL) auf, und im Bereich des Umlenkbogens B wird eine ideale Mitnahmeposition erreicht.

Die konstruktive Gestaltung der Bandförderanlage A gemäß Fig. 10 verdeutlicht dieses Konzept, wobei die Auflaufstütze 7 als eine an das Deckband 2 anpressbare Baugruppe ausgebildet ist. In der dargestellten Ausführung ist die Auflaufstütze 7 über jeweilige Längsholme 8, 9 an einem Querträger 10 gehalten, und dieser bildet seinerseits eine ortsfeste Abstützung an jeweiligen Tragsäulen 11 und 12. Damit wird eine "starre" Konstruktion gezeigt, bei der lediglich eine Voreinstellung der Auflaufstütze 7 im Bereich der im Bereich der Tragsäulen 11, 12 vorgesehenen Halteteile 13 vorgesehen ist.

In einer weiteren, nicht näher dargestellten Ausführung ist denkbar, dass die Auflaufstütze 7 mittels eines Stellgliedes in die dargestellte Anlageposition verlagerbar gehalten sein kann. Damit ist auch eine Variation der Andrucklage der Stütze 7 "während des Betriebes" bei Nutzung der Bandanlage A denkbar. Ebenso ist eine konstruktive Gestaltung möglich, bei der die beiden Auflagescheiben 3, 4 relativ zur Auflaufstütze 7 verlagerbar ausgeführt sind. Damit können jeweilige Anpresspositionen und/oder Anpresskräfte im Wirkbereich von Stütze 7 und Band 2 ebenfalls einstellbar gestaltet werden.

Aus der Prinzipdarstellung gemäß Fig. 8 wird deutlich, dass im Bereich des von den beiden, insbesondere gleiche Durchmesser aufweisenden Auflagescheiben 3, 4 definierten Umlenkbogens B (Fig. 6) zwei Auflaufstützen 7, 7' vorgesehen sind. Diese Auflaufstützen 7, 7' können wahlweise einzeln oder gemeinsam in die Anlagestellung (Fig. 8) überführt werden. Aus den vorbeschriebenen konstruktiven Ausführungen ergibt sich in Zusammenschau mit der Wirkdarstellung gemäß Fig. 9 ein optimales System, derart, dass der von der Auflaufstütze 7, 7' ablaufende und dabei zumindest bereichsweise auf den Auflagescheiben 3, 4 aufliegende Trum T des Bandes 2 durch eine kraftschlüssige Pressverbindung gegen axiale Verschiebung gesichert ist.

Gleichzeitig wird im Bereich des von der Auflaufstütze 7, 7' ablaufenden Trums T eine erhöhte Radialkraft nutzbar. Ausgehend von den elastischen Eigenschaften des Bandes 2 ist es damit möglich, dass im Bereich der beiden Auflagescheiben 3, 4 eine axial von diesen weg in den Freiraum F gerichtete Radialausformung gebildet ist. In Fig. 3 bis Fig. 5 wird diese "sichelförmige" Zone des verformten Bandes 2 durch ein radiales Abstandsmaß D, D' verdeutlicht. Das Band 2 wird in diesem Bereich in den Freiraum F hineingezogen, gleichzeitig ist die reibschlüssige Auflage auf den Scheiben 3 und 4 gewährleistet. Denkbar ist, dass durch einen nicht näher dargestellten Gegenhalter 15 eine zwangsgeführte Begrenzung dieses radialen Einziehens erreicht werden kann (Fig. 9). Dieser Gegenhalter 15 definiert zum Hauptband 1 hin bzw. zum ablaufenden Trum T' des Deckbandes 2 hin einen Abstand H (Fig. 9), so dass nur bis zu dieser Höhe H hin der umgelenkte Trum T' des Bandes 2 verlagert werden kann. Dabei kann der Gegenhalter 15 eine gleitende oder rollende Abstützung für das ausgeformte Trum T' des Bandes 2 bilden.

Die Ausführung der allgemein mit 7, 7' bezeichneten Auflaufstütze lässt unterschiedliche konstruktive Gestaltungen zu, wobei in einfachster Ausführung ein als Anlageglied vorgesehenes Stangenteil (nicht dargestellt) genutzt werden kann. Die Ausführung gemäß Fig. 10 zeigt, dass die Auflaufstütze 7 hier ein Rollenelement 14 in einstückiger Ausführung als das Anlageglied aufweist. Denkbar ist auch, dass die als Anlageglied vorgesehene Auflaufstütze 7, 7' mehrteilig ausgeführt werden kann. Ebenso ist vorgesehen, dass im Abstützungsbereich eine minimale Flächenpressung dadurch erreicht wird, dass die Auflaufstütze 7, 7' eine ballige Struktur aufweist.

In einer weiteren Kombination könnte die Auflaufstütze 7, 7' als Anlageglied aus einer Aneinanderreihung von zueinander versetzten Stangenteilen und/oder Rollenelementen gebildet werden (nicht dargestellt). Ebenso ist denkbar, dass das Anlageglied der Auflaufstütze 7, 7' mit elastischem Material eine federnde Anlage bewirkt oder die Stützkonstruktion insgesamt federnde Bauteile aufweist. Damit können die elastischen bzw. dynamischen Eigenschaften des Systems weiter verbessert und an unterschiedliche Ausführungen von Förderanlagen A angepasst werden.

Ebenso ist vorgesehen, dass die Auflaufsicherung S auch dann wirksam ist, wenn die beiden Auflagescheiben 3, 4 unterschiedliche Durchmesser aufweisen (nicht dargestellt) und damit ein System nach Art eines "Kurvenbandes" realisiert wird.

In einer weiteren Ausführung des Systems ist denkbar, dass bei einem auf entgegen gerichtete Förderrichtungen umschaltbaren Bandsystem die zumindest eine Auflaufsicherung S an jeweils unterschiedlichen tangentialen Auflaufpositionen des "umgeschalteten" Bandes wirksam werden kann (nicht dargestellt). Dabei ist vorgesehen, dass das System mit geringem Aufwand an einen Reversierbetrieb anpassbar ist und eine einfache Verlagerung der Auflaufsicherung S genutzt wird.

Die vorbeschriebene Rollenumlenkung R mit zumindest zwei axial gegenüberliegenden Auflagescheiben 3, 4 ist so konzipiert, dass der quer zur Förderrichtung E einen Freiraum F bildende Stützabstand auch für nur ein - hier als Hauptband 2' vorgesehenes - Förderband in einem Ein-Band-System nutzbar ist. Bei diesem in Fig. 12 dargestellten Umlenkungs-Prinzip des einen Bandes 2' wird deutlich, dass in dieses System die vorbeschriebene Auflaufstütze 7 als Sicherung S integriert ist und dabei sämtliche der im Zusammenhang mit dem als Deckband 2 vorgesehenen Förderband 2 dargestellten Vorteile (Fig. 1 bis Fig. 11) verwirklicht werden. In Fig. 7 ist mit einer unterbrochenen Strichdarstellung diese vergleichbare Einlagen-Varianten des Systems ähnlich dargestellt, wobei die zumindest eine Auflaufstütze 7 ebenfalls in dem Freiraum F verläuft, die Anordnung eines Material-Bandes 1 jedoch nicht zwingend vorgesehen ist.

## Patentansprüche

1. Bandförderanlage zum Transportieren von Schüttgut, Stückgut o. dgl. Materialien, wobei zumindest ein als Hauptband oder Deckband mit dem Schüttgut zusammenwirkendes Förderband (2, 2') im Bereich einer Rollenumlenkung (R) einen Umlenkbogen (B) durchläuft und dabei die Rollenumlenkung (R) von zumindest zwei axial gegenüberliegenden Auflagescheiben (3, 4) gebildet ist, **dadurch gekennzeichnet, dass** die Auflagescheiben (3, 4) quer zur Förderrichtung (E) einen einen Freiraum (F) bildenden Stützabstand definieren, im Bereich dieses Freiraumes (F) eine an der Rückseite des Förderbandes (2, 2') positionierte Auflaufstütze (7, 7') als Sicherung vorgesehen ist und diese von der Drehachse der Auflagescheiben (3,4) unabhängige Auflaufsicherung (S, S') beginnend im Bereich einer tangentialen Auflaufposition (AP) an der Unterseite des Förderbandes (2, 2') anliegt, wobei die Auflaufsicherung (S, S') eine radial im Abstand und ohne Verbindung zu einer Stützachse (5, 6) der Auflagescheiben (3, 4) angeordnete Baugruppe bildet.

2. Bandförderanlage nach Anspruch 1, **dadurch gekennzeichnet, dass** die Auflaufsicherung (S, S') im Bereich des zugeführten Trums (T) des Förderbandes (2, 2') zumindest dessen radial nach innen gerichteter Ausformung (D, D') entgegenwirkt.

3. Bandförderanlage nach Anspruch 1 oder 2, **dadurch gekennzeichnet, dass** die Rollenumlenkung (R) mit mehreren in einem Auflagebogen (B, B') des umgelenkten Bandtrums (T) befindlichen und in Umfangsrichtung der Auflagescheiben (3, 4) versetzt angeordneten Auflaufsicherungen (S, S') versehen ist, wobei bei Anwendung mehrerer Auflaufsicherungen (S, S') die jeweiligen Auflaufstützen (7, 7') wahlweise gemeinsam oder einzeln in die Anlagestellung (AP) überführbar sind.

4. Bandförderanlage nach einem der Ansprüche 1 bis 3, **dadurch gekennzeichnet, dass** als Auflaufsicherung (S, S') eine lineare Auflaufstütze (7, 7') vorgesehen ist und diese an der Rückseite des tangential zwischen den beiden Auflagescheiben (3, 4) an deren Umfang auflaufenden Trums (T) des Förderbandes (2, 2') einen linearen Wirkbereich in Form einer Berührungslinie oder -fläche (AL) bildet, derart, dass die Berührungslinie oder -fläche (AL) mit einem parallelen Abstand (PA, PA') zu beiden Drehachsen (5, 6) der Auflagescheiben (3, 4) bzw. deren Stützebene (SE) verläuft.

5. Bandförderanlage nach einem der Ansprüche 1 bis 4, **dadurch gekennzeichnet, dass** die Auflaufstütze (7, 7') ein Gegenglied bildet, an dem das auf die beiden Auflagescheiben (3, 4) auflaufende Förderband (2, 2') ausrichtbar ist, wobei der von der Auflaufstütze (7, 7') ablaufende sowie dabei zumindest bereichsweise auf den Auflagescheiben (3, 4) aufliegende Trum (T) des Bandes (2) kraftschlüssig gegen axiale Verschiebung gesichert ist und dabei im Bereich des in dem Auflaufbogen (B) ablaufenden Trums (T) eine erhöhte Radialkraft (FP, FP') nutzbar ist, derart, dass im Bereich der beiden Auflagescheiben (3, 4) bei der Schüttgutmitnahme eine axial von diesen weg in den Freiraum (F) gerichtete Radialausformung (Abstand D, D') ausgleichbar ist.

6. Bandförderanlage nach einem der Ansprüche 1 bis 5, **dadurch gekennzeichnet, dass** mittels der zumindest einen Auflaufstütze (7) die radiale Flächenpressung (FP, FP') zumindest des auf den beiden Auflagescheiben aufliegenden Trums (T) des Förderbandes (2, 2') beeinflussbar ist, derart, dass das jeweilige Band (2, 2') eine in Querrichtung zumindest bereichsweise linearisierte Kontur (AL) aufweist und die Auflaufstütze (7, 7') als eine an das Förderband (2, 2') anpressbare Baugruppe vorgesehen ist.

7. Bandförderanlage nach einem der Ansprüche 1 bis 6, **dadurch gekennzeichnet, dass** die Auflagescheiben (3, 4) quer zur Förderrichtung (E) einen einstellbaren Stützabstand (C) definieren und/oder die beiden Auflagescheiben (3, 4) in radialer Richtung relativ zur Auflaufstütze (7) verlagerbar sind.

8. Bandförderanlage nach einem der Ansprüche 1 bis 7, **dadurch gekennzeichnet, dass** die Auflaufstütze (7, 7') mittels eines Stellgliedes in die Anlageposition (AP, AP') verlagerbar ist.

9. Bandförderanlage nach einem der Ansprüche 1 bis 8, **dadurch gekennzeichnet, dass** die Auflagescheiben (3, 4) gleiche oder unterschiedliche Durchmesser aufweisen.

10. Bandförderanlage nach einem der Ansprüche 1 bis 9, **dadurch gekennzeichnet, dass** die jeweilige Auflaufstütze (7, 7') zumindest einen an dem zugeordneten Förderband (2, 2') anlegbaren Stangenteil und/oder ein Rollenelement als jeweiliges Anlageglied aufweist/en.

11. Bandförderanlage nach Anspruch 10, **dadurch gekennzeichnet, dass** das als Auflaufstütze (7, 7') wirksame Anlageglied wahlweise mehrteilig ausgebildet ist, das Anlageglied aus einer Aneinanderreihung von auf Lücke zueinander versetzten Stangenteilen und/oder Rollenelementen gebildet ist und/oder das Anlageglied der Auflaufstütze (7, 7') eine federnde Anlage bewirkt.

12. Bandförderanlage nach einem der Ansprüche 1 bis 11, **dadurch gekennzeichnet, dass** die zumindest eine Auflaufstütze (7, 7') mit jeweiligen die Ausformung des Förderbandes (2, 2') zum Freiraum (F) hin begrenzenden Gegenhaltern (15) zusammenwirkt.

13. Bandförderanlage nach Anspruch 12, **dadurch gekennzeichnet, dass** die Gegenhalter (15) eine gleitende oder rollende Abstützung für das ausgeformte Trum (T') des Förderbandes (2, 2') bilden.

14. Bandförderanlage nach einem der Ansprüche 1 bis 13, **dadurch gekennzeichnet, dass** bei einem auf entgegen gerichtete Förderrichtungen umschaltbaren Band-system die zumindest eine Auflaufsicherung (S) in jeweils unterschiedliche tangentiale Auflaufpositionen verlagerbar ist.

15. Bandförderanlage zum Transportieren von Schüttgut, Stückgut oder dgl. Materialien nach einem der Ansprüche 1 bis 14, wobei diese mit einem das Material aufnehmenden Hauptband (1) und einem diesem als Deckband (2) zugeordneten zweiten Förderband eine Doppel-Band-Anlage definiert, mit dieser das zugeführte Material (M) in Förderrichtung (E) in einer Übergangszone (Z) zwischen die Vorderseiten der beiden Förderbänder (1, 2) einführbar ist, in einem nachgeordneten Teilbereich einer Förderstrecke die beiden Bänder (1, 2) mit ihren Vorderseiten gegeneinander pressbar sind und dabei das Material (M) mitführbar ist, derart, dass in der Übergangszone (Z) eine sowohl das Hauptband (1) als auch das oberhalb diesem zugeführte Deckband (2') im Bereich eines Umlenkbogens (B, B') erfassende Rollenumlenkung (R) wirksam ist, wobei die Rollenumlenkung (R) mit zumindest zwei axial gegenüberliegenden sowie einen Freiraum (F) bildenden Auflagescheiben (3, 4) versehen, dabei im Bereich des Freiraumes (F) eine Auflaufsicherung (S, S') zumindest an dem als Deckband (2) vorgesehenen Förderband wirksam und dessen Lage zumindest im Bereich des auflaufenden Bandtrums (T) mittels der Auflaufsicherung (S, S') beeinflussbar ist.

## Claims

1. Belt conveyor system for transporting bulk material, piece goods or similar materials, at least one conveyor belt (2, 2'), which interacts with the bulk material as a main belt or a cover belt, travelling over a deflection arc (B) in the region of a roller deflector (R), and the roller deflector (R) being formed by at least two axially opposing support discs (3, 4), **characterised in that**, transversely to the conveying direction (E), the support discs (3, 4) define a support distance which creates a free space (F), a winding-on support (7, 7'), positioned on the back of the belt (2, 2'), being provided as a securing means and said winding-on securing means (S, S'), which is independent of the rotary shaft of the support discs (3, 4), being in contact with the underside of the conveyor belt (2, 2') beginning in the region of a tangential winding-on position (AP), the winding-on securing means (S, S') forming a unit that is mounted so as to be radially spaced from and not connected to a support shaft (5, 6) of the support discs (3, 4).

2. Belt conveyor system according to claim 1, **characterised in that**, in the region of the feed-in side (T) of the conveyor belt (2, 2'), the winding-on securing means (S, S') counteracts at least the radially inwardly oriented shaping (D, D') of said belt.

3. Belt conveyor system according to either claim 1 or claim 2, **characterised in that** the roller deflector (R) is provided with a plurality of winding-on securing means (S, S') located in a contact arc (B, B') of the deflected belt side (T) and arranged so as to be offset in the peripheral direction of the support discs (3, 4), it being possible for each of the winding-on supports (7, 7') to be transferred together or separately, as desired, into the contact position (AP) when using a plurality of winding-on securing means (S, S').

4. Belt conveyor system according to any of claims 1 to 3, **characterised in that** a linear winding-on support (7, 7') is provided as winding-on securing means (S, S') and forms a linear effective region in the form of a contact line or surface (AL) on the back of the side (T) of the conveyor belt (2, 2') which is wound on tangentially between the two support discs (3, 4) on the periphery thereof, such that the contact line or surface (AL) extends at a parallel distance (PA, PA') from the two rotary shafts (5, 6) of the support discs (3, 4) and/or the support planes (SE) thereof.

5. Belt conveyor system according to any of claims 1 to 4, **characterised in that** the winding-on support (7, 7') forms a counterpart member with which the conveyor belt (2, 2') which is wound onto the two support discs (3, 4) can be aligned, the side (T) of the belt (2) which is runs off the winding-on support (7, 7') and is also in contact with the support discs (3, 4) at least in regions being secured in a non-positive manner against axial displacement, and it being possible for increased radial force (FP, FP') to be used in the region of the side (T) which runs off in the winding-on arc (B), such that, when bulk material is being carried along, a radial shaping (distance D, D') that is oriented axially away from the two support discs (3, 4) and towards the free space (F) can be compensated in the region of said support discs.

6. Belt conveyor system according to any of claims 1 to 5, **characterised in that** the radial surface pressure (FP, FP') at least of the side (T) of the conveyor belt (2, 2') which is in contact with the two support discs can be influenced by the at least one winding-on support (7), such that the relevant belt (2, 2') has a contour (AL) which is linearised, at least in regions, in the transverse direction, and the winding-on support (7, 7') is provided as a unit which can be pressed against the conveyor belt (2, 2').

7. Belt conveyor system according to any of claims 1 to 6, **characterised in that** the support discs (3, 4) define an adjustable support distance (C) transversely to the conveying direction (E) and/or the two support discs (3, 4) can be moved in a radial direction relative to the winding-on support (7).

8. Belt conveyor system according to any of claims 1 to 7, **characterised in that** the winding-on support (7, 7') can be moved into the contact position (AP, AP') by means of an actuator.

9. Belt conveyor system according to any of claims 1 to 8, **characterised in that** the support discs (3, 4) have the same or different diameters.

10. Belt conveyor system according to any of claims 1 to 9, **characterised in that** each of the winding-on supports (7, 7') has at least one rod part which can be placed in contact with the associated conveyor belt (2, 2'), and/or a roller element as the contact member in each case.

11. Belt conveyor system according to claim 10, **characterised in that** the contact member which operates as the winding-on support (7, 7') is optionally formed in multiple parts, the contact member is formed by a succession of rod parts and/or roller elements that are mutually offset having gaps therebetween, and/or the contact member of the winding-on supports (7, 7') brings about resilient contact.

12. Belt conveyor system according to any of claims 1 to 11, **characterised in that** the at least one winding-on support (7, 7') interacts with respective clamps (15) which limit the shaping of the conveyor belt (2, 2') to within the free space (F).

13. Belt conveyor system according to claim 12, **characterised in that** the clamps (15) form a sliding or rolling support for the shaped side (T) of the conveyor belt (2, 2').

14. Belt conveyor system according to any of claims 1 to 13, **characterised in that** the at least one winding-on securing means (S) can be moved into different tangential winding-on positions in each case, in a belt system in which the conveying direction can be reversed.

15. Belt conveyor system for transporting bulk material, piece goods or similar materials according to any of claims 1 to 14, wherein said system defines a double belt system by means of a main belt (1) which receives the material and a second conveyor belt which is assigned to said main belt as a cover belt (2), by means of which system the fed-in material (M) can be introduced in a transition zone (Z) between the front faces of the two conveyor belts (1, 2) in the conveying direction (E), the front sides of the two belts (1, 2) being able to be pressed against one another in a downstream portion of a conveying path,
and the material (M) being able to be carried along in the process, such that a roller deflector (R), which encompasses both the main belt (1) and the cover belt (2'), which is fed in above said main belt, in the region of a deflection arc (B, B'), is effective in the transition zone (Z), wherein the roller deflector (R) is provided with at least two support discs (3, 4) that are axially opposed and form a free space (F), and, in the region of the free space (F), a winding-on securing means (S, S') is effective at least on the conveyor belt provided as the cover belt (2), and the position of said belt can be influenced by the winding-on securing means (S, S'), at least in the region of the wound-on belt side (T).

## Revendications

1. Convoyeur à bandes destiné au transport de produits en vrac, de produits de détail ou de matériaux analogues, au moins une bande transporteuse (2, 2') qui coopère en tant que bande principale ou bande de recouvrement avec les produits en vrac passant par une courbure de déviation (B) au niveau d'une déviation à rouleau (R) et la déviation à rouleau (R) étant formée par au moins deux poulies d'appui (3, 4) opposées axialement, **caractérisé en ce que** les poulies d'appui (3, 4) définissent transversalement à la direction de transport (E) une distance de support formant un espace libre (F), **en ce qu'**un support anti-accumulation (7, 7') positionné sur la face arrière de la bande transporteuse (2, 2') est prévue en tant que sécurité au niveau de cet espace libre (F) et **en ce que** cette sécurité anti-accumulation (S, S'), indépendante de l'axe de rotation des poulies d'appui (3, 4), vient en appui sur la face inférieure de la bande transporteuse (2, 2') en commençant au niveau d'une position anti-accumulation tangentielle (AP), la sécurité anti-accumulation (S, S') formant un ensemble disposé à distance d'un axe de support (5, 6) des poulies d'appui (3, 4) et sans connexion avec celui.

2. Convoyeur à bandes selon la revendication 1, **caractérisé en ce que** la sécurité anti-accumulation (S, S') empêche, au niveau du brin amené (T) de la bande transporteuse (2, 2'), au moins une déformation (D, D') de celle-ci dirigée radialement vers l'intérieur.

3. Convoyeur à bandes selon la revendication 1 ou 2, **caractérisé en ce que** la déviation à rouleau (R) est pourvue d'une pluralité de sécurités anti-accumulation (S, S') situées dans une courbure de déviation (B, B') du brin de bande dévié (T) et disposées de façon décalée dans la direction périphérique des poulies d'appui (3, 4), en cas d'utilisation d'une pluralité de sécurités anti-accumulation (S, S') les supports anti-accumulation respectifs (7, 7') pouvant être transférés optionnellement conjointement ou individuellement dans la position anti-accumulation (AP).

4. Convoyeur à bandes selon l'une des revendications 1 à 3, **caractérisé en ce qu'**un support anti-accumulation linéaire {7, 7') est prévu comme sécurité anti-accumulation (S, S') et ce support anti-accumulation forme sur la face arrière du brin de la bande transporteuse (2, 2'), qui monte tangentiellement entre les deux poulies d'appui (3, 4) à la périphérie de celles-ci, une zone opérante linéaire se présentant sous la forme d'une ligne ou d'une surface de contact (AL) de sorte que la ligne ou la surface de contact (AL) s'étend à une distance parallèle (PA, PA') des deux axes de rotation (5, 6) des poulies d'appui (3, 4) ou de leur plan de support (SE).

5. Convoyeur à bandes selon l'une des revendications 1 à 4, **caractérisé en ce que** le support anti-accumulation (7, 7') forme un contre-élément sur lequel la bande transporteuse (2, 2') montant vers les deux poulies d'appui (3, 4) peut être alignée, le brin (T) de la bande (2) qui descend depuis le support anti-accumulation (7, 7') et qui vient en appui au moins partiellement sur les poulies d'appui (3, 4) étant empêché par adhérence de glisser axialement et une force radiale accrue (FP, FP') pouvant être utilisée au niveau du brin descendant (T) dans la courbure de déviation (B) de façon à pouvoir compenser au niveau des deux poulies d'appui (3, 4), lorsque les produits en vrac sont emportés, une déformation radiale (Distance D, D') orientée depuis ces poulies jusque dans l'espace libre (F).

6. Convoyeur à bandes selon l'une des revendications 1 à 5, **caractérisé en ce que** la pression de surface radiale (FP, FP') au moins du brin (T) de la bande transporteuse (2, 2') qui est en appui sur les deux poulies d'appui peut être influencée de telle sorte que la bande respective (2, 2') présente un contour (AL) linéarisé au moins par endroits dans la direction transversale et le support anti-accumulation (7, 7') est prévu sous la forme d'un ensemble pouvant être pressé sur la bande transporteuse (2, 2').

7. Convoyeur à bandes selon l'une des revendications 1 à 6, **caractérisé en ce que** les poulies d'appui (3, 4) définissent transversalement à la direction de transport (E) une distance de support réglable (C) et/ou les deux poulies d'appui (3, 4) peuvent être déplacées dans une direction radiale par rapport au support anti-accumulation (7).

8. Convoyeur à bandes selon l'une des revendications 1 à 7, caractérisé le support anti-accumulation (7, 7') peut être déplacé dans la position anti-accumulation (AP, AP') au moyen d'un actionneur.

9. Convoyeur à bandes selon l'une des revendications 1 à 8, caractérisé les poulies d'appui (3, 4) ont des diamètres identiques ou différents.

10. Convoyeur à bandes selon l'une des revendications 1 à 9, **caractérisé en ce que** le support anti-accumulation respectif (7, 7') comporte au moins une partie tige qui peut venir en appui sur la bande transporteuse associée (2, 2') et/ou un élément de rouleau en tant qu'élément d'appui respectif.

11. Convoyeur à bandes selon la revendication 10, **caractérisé en ce que** l'élément d'appui agissant comme un support anti-accumulation (7, 7) est conçu en plusieurs pièces, l'élément d'appui est constitué d'une juxtaposition de parties tiges et/ou d'éléments de rouleau décalés les uns aux autres en ménageant un interstice et/ou l'élément d'appui du support anti-accumulation (7, 7') réalise un appui élastique.

12. Convoyeur à bandes selon l'une des revendications 1 à 11, **caractérisé en ce que** l'au moins un support anti-accumulation (7, 7') coopère avec des contre-supports respectifs (15) délimitant la déformation de la bande transporteuse (2, 2') en direction de l'espace libre (F).

13. Convoyeur à bandes selon la revendication 12, **caractérisé en ce que** les contre-supports (15) forment un support coulissant ou roulant pour le brin déformé (T') de la bande transporteuse (2, 2').

14. Convoyeur à bandes selon l'une des revendications 1 à 13, **caractérisé en ce que**, dans un système de bandes commutable dans des sens de transport opposés, l'au moins une sécurité anti-accumulation (S) peut être déplacée dans différentes positions anti-accumulation tangentielles.

15. Convoyeur à bandes destiné au transport de produits en vrac, de produits de détail ou de matériaux analogues selon l'une des revendications 1 à 14, ce convoyeur à bandes définissant avec une bande principale (1) recevant le matériau et une seconde bande transporteuse, associée à cette bande principale en tant que bande de recouvrement (2), un système à deux bandes, ce système à deux bandes pouvant introduire le matériau amené (M) dans une zone de transition (Z) située entre les faces avant des deux bandes transporteuses (1, 2) dans la direction de transport (E), les deux bandes (1, 2) peuvent être pressées au niveau leurs faces avant l'une contre l'autre dans une sous-zone en aval d'une section de convoyeur, le matériau (M) pouvant ainsi être entraîné de telle sorte qu'une déviation à rouleau saisissant aussi bien la bande principale (1) que la bande de recouvrement (2'), amenée au-dessus de cette bande principale, au niveau de la courbure de déviation (B, B') est opérante dans la zone de transition (Z), la déviation à rouleau (R) étant pourvue d'au moins deux poulies d'appui (2, 4) qui sont opposées axialement l'une à l'autre et qui forment un espace libre (F), une sécurité anti-accumulation (S, S') étant opérante dans la région de l'espace libre (F) au moins au niveau de la bande transporteuse prévue comme bande de recouvrement (2) et la protection anti-accumulation (S, S') pouvant influer sur la position de cette bande transporteuse au moins au niveau du brin montant (T) de la bande.
